# EUROPEAN PATENT SPECIFICATION

(11) **EP 3 561 492 B1**
(45) Date of publication and mention of the grant of the patent: **14.10.2026**
(21) Application number: 18734022.9
(22) Date of filing: 13.02.2018
(51) Int. Cl.: G01N 21/65, G01N 21/01, G01J 3/44, G01J 5/00, G01J 3/02, G01J 5/08

(54) **RAMAN SPECTRUM DETECTION DEVICE AND DETECTION SAFETY MONITORING METHOD THEREFOR**
RAMANSPEKTRUMDETEKTIONSVORRICHTUNG UND DETEKTIONSSICHERHEITSÜBERWACHUNGSVERFAHREN DAFÜR
DISPOSITIF DE DÉTECTION DE SPECTRE RAMAN ET PROCÉDÉ DE SURVEILLANCE DE SÉCURITÉ DE DÉTECTION ASSOCIÉ

(30) Priority: 26.12.2017 CN 201711439074
(43) Date of publication of application: 30.10.2019
(73) Proprietor: Nuctech Company Limited, Beijing 100084 (CN)
(72) Inventor: ZHANG, Jianhong, Beijing 10084 (CN); WANG, Hongqiu, Beijing 10084 (CN); FAN, Rui, Beijing 10084 (CN); LIU, Haihui, Beijing 10084 (CN)
(74) Representative: Gunzelmann, Rainer
(86) International application number: PCT/CN2018/076658
(87) International publication number: WO 2018/121799

(56) References cited:
- WO-A1-2014/008359
- WO-A1-2015/182429
- CN-A- 102 297 856
- CN-A- 103 868 906
- CN-A- 104 048 915
- CN-A- 106 770 176
- CN-U- 206 479 455
- US-A1- 2005 187 438
- US-A1- 2012 018 829
- US-A1- 2013 003 044
- US-A1- 2013 182 247
- US-A1- 2015 168 367

## Description

### Field of the Disclosure

Embodiments of the present disclosure generally relate to the field of Raman spectrum detection, and in particular to a Raman spectrum inspection apparatus and a method for monitoring a detection security of the Raman spectrum inspection apparatus.

### Description of the Related Art

Raman spectrum analysis technology is one of non-contact spectrum analysis technologies based on Raman scattering effects. It can analyze compositions of substance qualitatively and quantitatively. Raman spectrum is one of molecular vibration spectra. It may reflect fingerprint features of molecules for inspection of substance. The Raman spectrum inspection is a method for inspecting and recognizing substances by detecting Raman spectra produced by the Raman scattering effects of an object to be inspected to an exciting light. The Raman spectrum inspection method has been broadly used in various fields, such as liquid security inspection, gem inspection, explosive inspection, drug inspection, medicine inspection.

In recent years, Raman spectrum analysis technology has been widely applied in fields such as inspection of hazardous articles and recognition of substances. In the field of recognition of substances, the people often cannot judge properties of the substances correctly as various substances have different colors and shapes. The Raman spectrum depends on energy level structure of molecules of the object to be detected, thus, the Raman spectrum may be used as "fingerprint" information of substances for recognizing substances. Therefore, the Raman spectrum analysis technology has been applied broadly in fields of such as customs, common security, foods, drugs, environments.

US 2015/168367 A1 concerns a method of detecting an explosive material, and an analyzer and computer program products that perform such methods. A method includes illuminating at least a portion of the material with light, and monitoring the temperature of the illuminated portion. A power or location of the illuminating light is altered in response to the monitored temperature. Raman spectral data are produced in response to Raman radiation emitted from the portion in response to the light. The composition of the material is analyzed based on the Raman spectral data.

WO 2014/008359 A1 concerns systems and techniques for optical spectrometer detection using IR spectroscopy components and Raman spectroscopy components.

US 2005/187438 A1 concerns a system and method for detecting and quantifying an analyte in vivo. Anti-Stokes Raman scattered radiation emitted from a sample under incident radiation excitation is collected and analyzed. The intensity response is corrected for temperature effects using a Boltzmann correction factor based on the temperature of the sample.

US 2012/018829 A1 concerns a temperature-adjusted spectrometer including a light source and a temperature sensor.

US 2013/003044 A1 concerns a system and method for assessing chronic exposure of a biological sample to an analyte of interest.

### SUMMARY

The present invention is defined by the independent claims. Further aspects of the present invention are defined by the dependent claims. With the Raman spectrum inspection apparatus and the method of monitoring a detection security of the Raman spectrum inspection apparatus in the above embodiments, it is possible to prevent security problem caused by over-heat damage of the sample due to the irradiating of the exciting light during the Raman spectrum inspection.

### BRIEF DESCRIPTION OF THE DRAWINGS

In order that the present disclosure can be understood better, embodiments of the present disclosure will be described below with reference to the following drawings:
Figure 1 is a schematic diagram showing an arrangement of a Raman spectrum inspection apparatus according to an example, which does not form part of the present invention but contains infomration useful for understanding the present invention;
Figure 2 is a schematic diagram showing an arrangement of a Raman spectrum inspection apparatus according to an embodiment of the present disclosure in accordance with independent claim 1;
Figure 3 is a schematic diagram showing an arrangement of a Raman spectrum inspection apparatus according to a further example, which does not form part of the present invention but contains infomration useful for understanding the present invention;
Figure 4 is a schematic diagram showing an arrangement of a Raman spectrum inspection apparatus according to a yet further example, which does not form part of the present invention but contains infomration useful for understanding the present invention;
Figure 5 is a schematic diagram showing an arrangement of a Raman spectrum inspection apparatus according to a further embodiment of the present disclosure;
Figure 6 is a flow chart of a method of monitoring a detection security of a Raman spectrum inspection apparatus according to an embodiment of the present disclosure;
Figure 7 is a schematic diagram showing an arrangement of a Raman spectrum inspection apparatus according to a yet still further example, which does not form part of the present invention but contains infomration useful for understanding the present invention.
Figure 8 is a schematic diagram showing an arrangement of a Raman spectrum inspection apparatus according to a yet still further example, which does not form part of the present invention but contains infomration useful for understanding the present invention;
Figure 9 is a schematic diagram showing an arrangement of a Raman spectrum inspection apparatus according to a yet still further example, which does not form part of the present invention but contains infomration useful for understanding the present invention;
Figure 10 is a schematic diagram showing an arrangement of a Raman spectrum inspection apparatus according to a yet still further example, which does not form part of the present invention but contains infomration useful for understanding the present invention; and
Figure 11 is a schematic diagram showing an arrangement of a Raman spectrum inspection apparatus according to a yet still further example, which does not form part of the present invention but contains infomration useful for understanding the present invention.

Not all circuits or structures of the embodiments are shown in the drawings. Same reference numerals represent same or similar components or features throughout all of the drawings.

### DETAILED DESCRIPTION OF THE EMBODIMENTS

Technical solutions of the present disclosure will be described hereinafter in more detail by the way of embodiments with reference to the attached drawings. The same or similar reference numerals refer to the same or similar elements throughout the description. The explanation to the embodiments of the present disclosure with reference to the attached drawings is intended to interpret the general concept of the present disclosure, rather than being construed as limiting the present disclosure.

In accordance with a general concept of the present disclosure, it provides a Raman spectrum inspection apparatus comprising: a laser configured to emit exciting light; an optical device configured to guide the exciting light to a sample and collect a light signal from the sample; a spectrometer configured to split the light signal collected by the optical device so as to generate a Raman spectrum of the detected sample; and a security monitor configured to monitor a security state of the sample during irradiating of the exciting light from the laser onto the sample, and to provide a security indicating signal representing whether or not the sample is damaged due to being irradiated by the exciting light. Thereby, it is possible to prevent security problem caused by over-heat damage of the sample due to the irradiating of the exciting light during the Raman spectrum inspection.

In addition, in the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawings.

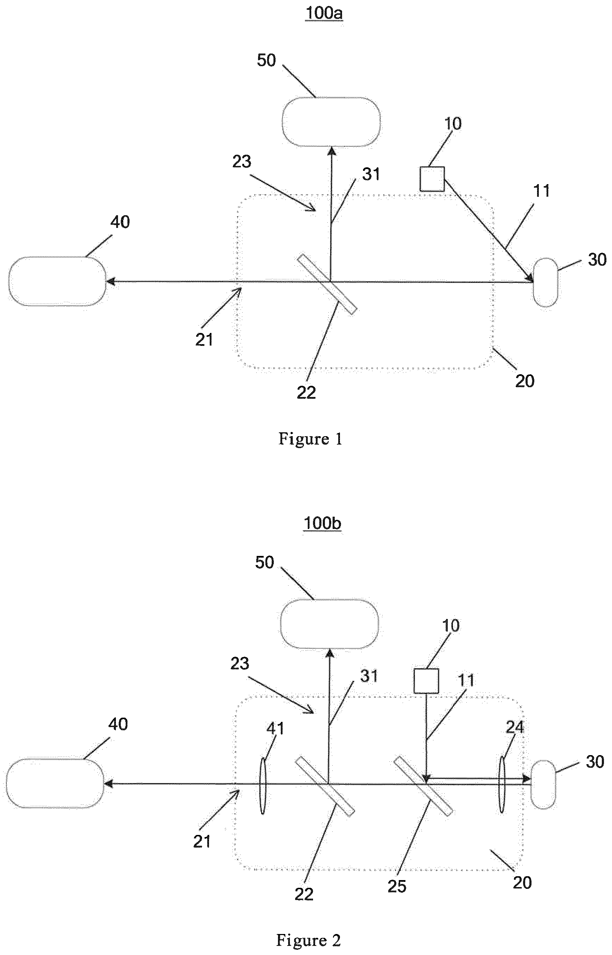

Figure 1 is a schematic diagram showing a structure of the Raman spectrum inspection apparatus 100a according to an example, which does not form part of the present invention but contains infomration useful for understanding the present invention. The Raman spectrum inspection apparatus 100a includes a laser 10 configured to emit an exciting light 11; an optical device or assembly 20 configured to guide the exciting light 11 to a sample 30 and collect a light signal from the sample 30; a spectrometer 40 configured to split the light signal collected by the optical device to generate Raman spectrum of the sample 30. As an example, the Raman spectrum of the sample 30 generated by the spectrometer 40 may be compared with the Raman spectra of the known substances to determine the composition of the sample 30. The comparing may be implemented for example by a computer or a processor.

During the Raman inspection, security accident may typically refer to that heat absorption of sample causes temperature rise during irradiating of the exciting light onto the sample, and thereby it may result in ablation, even ignition and explosion phenomenon of the detected object. In the embodiments of the present disclosure, the Raman spectrum inspection apparatus further comprises or is provided with a security monitor configured to monitor a security state of the sample 30 during irradiating of the exciting light 11 from the laser 10 onto the sample 30. In an example, the security monitor may provide a security indicating signal representing whether or not the sample is damaged due to being irradiated by the exciting light.

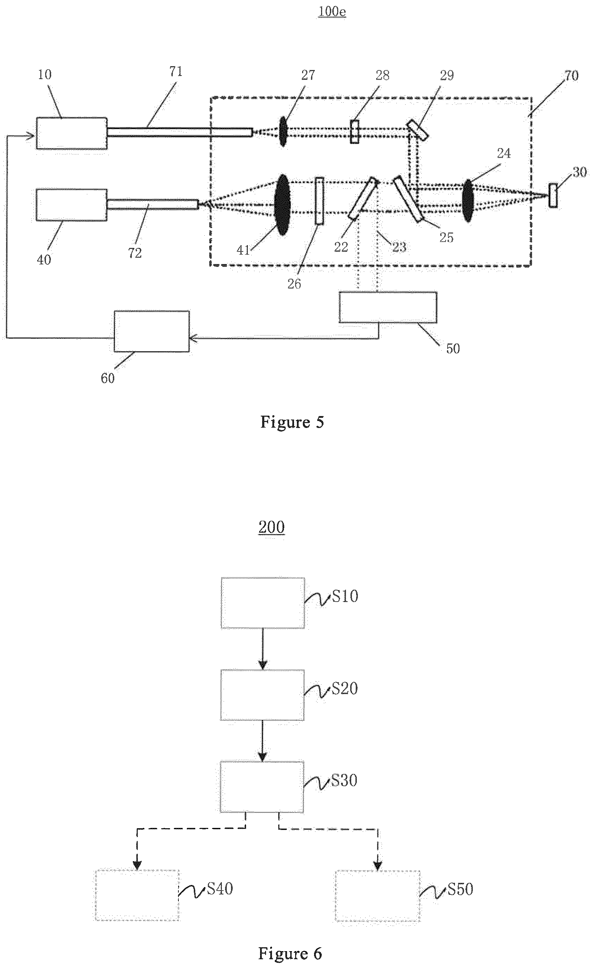

In some examples, as described below, the Raman spectrum inspection apparatus may further comprise a controller (see for example Figure 5), which is configured to send a control signal to the laser so as to reduce the power of the laser or to turn off the laser if the security indicating signal provided by the security monitor indicates that the security of the sample is affected by the detection performed to the sample.

Exemplarily, in the detection by using the exciting light to irradiate the sample, the security state of the sample may be represented by a temperature, a variation of temperature or a surface state of the sample. In some embodiments, the security monitor comprises a temperature sensor configured to sense a temperature or a variation of temperature of the detected sample during irradiating of the exciting light from the laser onto the sample. The controller may send a control signal to the laser so as to take corresponding measures, for example, to reduce the power of the laser or to turn off the laser in order to ensure detection security, if the temperature or variation of temperature of the sample sensed by the temperature sensor exceeds a threshold. In other embodiments, the temperature may be monitored after allowing the exciting light to irradiate for a short time before the Raman inspection, and the detection security of the sample is determined based on the variation of temperature, then the emitting of the exciting light is controlled accordingly.

The temperature sensor may include a contact type temperature sensor or non-contact type temperature sensor. The contact type temperature sensor may contact a predetermined position of the sample (for example, may be located near a position of the sample onto which the exciting light is irradiated, or may be located at a front face, a side face or a rear face of the sample), and sense a temperature of the surface or interior of the sample irradiated by the exciting light. The contact type temperature sensor may transmit temperature information in a wired way or wirelessly to the system.

As an example of the non-contact type temperature sensor, as shown in Figure 1, an infrared detector 50 may be adopted as an infrared thermometer to detect the infrared light 31 emitted by the sample 30, so as to monitor the temperature or variation of temperature of the sample 30, since the radiation energy of the infrared light typically increases as the temperature of the sample rises. The variation of temperature of the sample 30 can be found by monitoring the radiation energy of the infrared light and then the emission of the laser may be controlled timely, so as to avoid security accident.

It will be understood that various forms of temperature sensors may be used as the security monitor to monitor the temperature or the variation of temperature of the detected sample, and the infrared detector 50 will be described below as an example of the temperature sensor.

Figure 2 shows an arrangement of a Raman spectrum inspection apparatus 100b according to an embodiment of the present disclosure. In an example, as shown in Figure 2, the optical device 20 may form or establish a Raman light signal collection light path 21 configured to collect a light signal, including Raman light component, from the sample 30. A first beam splitter 22 is provided in the Raman light signal collection light path 21. The first beam splitter 22 is arranged to form an infrared radiation branch 23 branching from the Raman light signal collection light path 21, to guide the infrared light from the sample 30 towards the infrared detector 50. The first beam splitter 22 can extract the infrared light emitted from the sample 30 from the Raman light signal collection light path 21, thus it may detect the infrared light while preventing the Raman light signal from being affected to the largest extent. As an example, the first beam splitter 22 may guide (e.g., reflect) the infrared light in a response waveband of the infrared detector to the infrared detector to the largest extent while preventing the Raman light signal (generally in a range of 0-3000cm⁻¹ (wave number) from being affected as far as possible. Certainly, it may also process the infrared light in the infrared radiation branch 23, for example, select waveband of the infrared light, or converge the infrared light, if required.

In the above example, the light path along which the infrared light travels and the light path along which the Raman scattering light travels are same or coaxial at their beginning ends (at the ends close to the sample 30, that is, a light path from the sample to the first beam splitter). The infrared light collected by this way can better exhibit actual temperature of the sample 30.

As an example, the first beam splitter 22 may be a short pass dichroic beam splitter arranged to reflect a light having a wavelength greater than a predetermined wavelength towards the infrared detector 50 while transmitting the light having a wavelength less than the predetermined wavelength through the short pass dichroic beam splitter. For example, the predetermined wavelength may be in a range of 700 nanometers to 300 micrometers, for example, between 900 nanometers and 1500 nanometers, for example, the predetermined wavelength may be arranged as 1200 nanometers. However, the predetermined wavelength of the short pass dichroic beam splitter is not limited to this range in the embodiments of the present disclosure. Typically, the wavelength range of the Raman spectrum for the spectrometer in the Raman spectrum inspection apparatus is from 550 nanometers to 1100 nanometers. The light having the wavelength less than the predetermined wavelength may be transmitted through the short pass dichroic beam splitter (for example, the transmissivity may be 90% or more), which will substantially have no influence on the Raman spectrum inspection. Meanwhile, the light having the wavelength greater than the predetermined wavelength can be transmitted along the infrared radiation branch to the infrared detector 50. Correspondingly, the infrared light will be received and analyzed by the infrared detector. A typical response waveband of the infrared detector may for example be 1500 nanometers to 3000 nanometers. However, the embodiments of the present disclosure are not limited to this, and the predetermined wavelength may be set according to the specific detector.

Although the short pass dichroic beam splitter is taken as an example to describe the first beam splitter 22 in the above example, it is not intended to limit embodiments of the present disclosure. Alternatively, the first beam splitter 22 may be implemented by any other wavelength selection beam splitting components known in the art.

In the embodiments of the present disclosure, the first beam splitter may also for example be implemented by a conventional beam splitter. As an example, the first beam splitter may be arranged to reflect a part of the light signal from the sample towards the infrared detector while transmitting the other part of the light signal from the sample towards the spectrometer. It may also achieve the signal light collecting function and the temperature monitoring function.

In an example, in the exemplified Raman spectrum inspection apparatus 100b shown in Figure 2, a first convergent lens 24, a second convergent lens 41 and a second beam splitter 25 may also be provided in the Raman light signal collection light path 21. The first convergent lens 24 is configured to converge the exciting light 11 to the sample 30 and collect a light signal from the sample 30. The second convergent lens 41 is configured to converge the collected light signal to the spectrometer 40. The second beam splitter 25 is arranged between the first convergent lens 24 and the first beam splitter 22 in the Raman light signal collection light path 21 and arranged to reflect the exciting light 11 from the laser 10 towards the first convergent lens 24 and transmit at least a part of the reflected light collected by the first convergent lens 24 from the sample 30 through the second beam splitter 25 to the first beam splitter 22 or the second convergent lens 41. In this example, the part of the light path along which the exciting light 11 is guided to the sample 30 and the part of the Raman light signal collection light path 21 between the second beam splitter 25 and the sample 30 coincide or are coaxial with each other. In the light path, the first beam splitter 22 is located downstream of the second beam splitter 25, which may avoid disturbance to the front end of the light path.

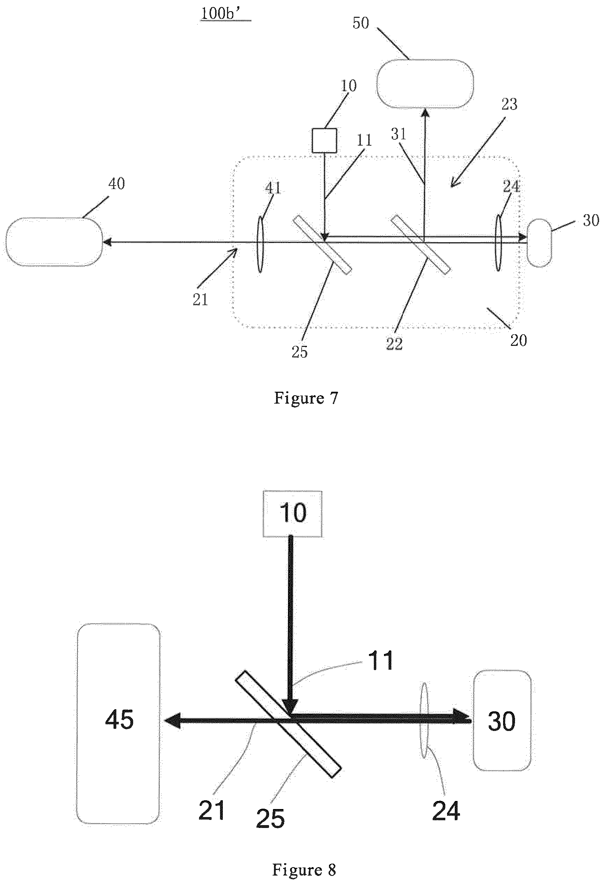

As an example, the positions of the first beam splitter 22 and the second beam splitter 25 in Figure 2 may be exchanged. For example, as shown in Figure 7, in the Raman spectrum inspection apparatus 100b', the second beam splitter 25 is located between the first beam splitter 22 and the second convergent lens 41 in the Raman light signal collection light path 21.

As an example, the second beam splitter 25 may be a long pass dichroic beam splitter, that is, it only permits the light having the wavelength greater than a certain threshold to be transmitted through it while blocking the light having the wavelength less than the threshold. It has an advantage of reducing Rayleigh scattering light from the sample 30. While producing the Raman scattering light, the sample 30 may often produce the Rayleigh scattering light which has a wavelength less than that of the Raman scattering light. The threshold of the long pass dichroic beam splitter may be set to reduce, even eliminate the Rayleigh scattering light having shorter wavelength, to enhance the signal noise ratio of the Raman light signal. The specific threshold of the long pass dichroic beam splitter may be selected as required in practical measurement. In the embodiments of the present disclosure, the second beam splitter 25 is not limited to the long pass dichroic beam splitter, for example, the second beam splitter 25 may be implemented by any other beam splitting components known in the art.

In an example, as shown in Fig. 5, in order to better suppress the Rayleigh scattering light, a Raman spectrum inspection apparatus 100e may be further provided with a long pass optical filter or a notch optical filter 26 arranged downstream of the first beam splitter in the Raman light signal collection light path 21 and configured to filter out the Rayleigh scattering light in the light signal passing through the first beam splitter 22. In the embodiments of the present disclosure, however, it is not intended to limit the position of the long pass optical filter or notch optical filter 26 in the Raman light signal collection light path 21, it may be arranged at any position between the sample and the spectrometer as long as it can serve for removing the Rayleigh scattering light of the light signal in the collection light path. For example, the long pass optical filter or notch optical filter may be located upstream of the first beam splitter as a variant to the embodiment shown in Fig. 5, or the long pass optical filter or notch optical filter 26 may also be provided between the first beam splitter and the second beam splitter. In the latter case, the light signal in the collection light path may pass through the first convergent lens, the second beam splitter, the long pass optical filter or notch optical filter, the first beam splitter, the second convergent lens and the spectrometer successively. Certainly, the embodiments of the present disclosure are not limited to this, for example, no long pass optical filters or notch optical filters 26 may be provided.

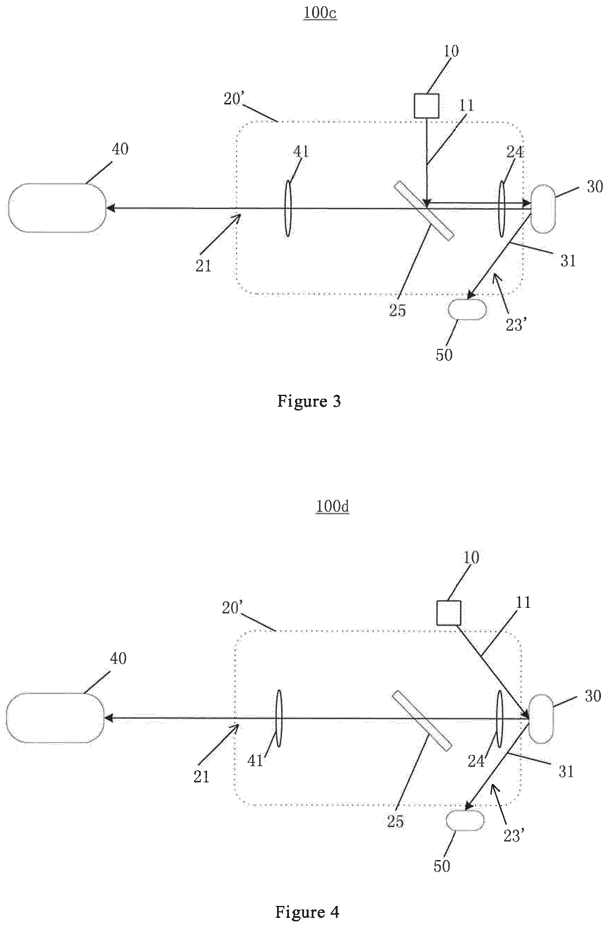

In another example, which does not form part of the present invention but contains infomration useful for understanding the present invention, as shown in Figure 3 and Figure 4, the optical device 20' may further form or establish: a Raman light signal collection light path 21 configured to collect the Raman light signal from the sample; and an infrared light collection light path 23' configured to collect the infrared light from the sample 30. In contrast to the infrared radiation branch 23 shown in Figure 1 and Figure 2, the infrared light collection light path 23' is independent of or separated completely from the Raman light signal collection light path 21. In this way, the original light path structure of the Raman spectrum inspection apparatus may be remained as far as possible. The infrared detector 50 may be arranged at any position close to the sample 30 as long as the intensity of the infrared signal may satisfy the detection requirements of the infrared detector 50.

The exemplified Raman spectrum inspection apparatus 100c shown in Figure 3 is same as the exemplified Raman spectrum inspection apparatus 100d shown in Figure 4 except the following structure: in Figure 3, the part of the light path along which the exciting light 11 is guided to the sample 30 (i.e., the exciting light path) and the part of the Raman light signal collection light path 21 between the second beam splitter 25 and the sample 30 coincide or are coaxial with each other, while in Figure 4, the light path along which the exciting light 11 is guided to the sample 30 is separated completely from the Raman light signal collection light path 21 (or in other words, "the exciting light 11 is irradiated off-axis or offset to the sample 30"). In the example shown in Figure 4, the second beam splitter 25 is not a necessary element. The presentation of it in Figure 4 is only intended to compare the example of Figure 4 with the example of Figure 3.

In the examples shown in Figure 1 and Figure 4, as an example, the exciting light may be redirected by some optical elements (such as a reflector) before it is irradiated to the sample 30, such that the exciting light can be guided conveniently and correctly to the sample 30.

As shown in Figure 5, in an example, the Raman spectrum inspection apparatus 100e may further include a controller 60. The controller 60 is configured to receive the detection results of the infrared detector 50 and send a control signal to the laser 10. The controller 60 may be configured to reduce the power of the laser 10 or turn off the laser 10 when the radiation energy of the infrared light detected by the infrared detector 50 exceeds a predetermined threshold. As an example, there is a correspondence relation between the temperature of the sample 30 and the radiation energy of the infrared light emitted by the sample 30, thus the predetermined threshold of the radiation energy of the infrared light set in the controller 60 may correspond to a temperature value not greater than the maximum permissible temperature of the sample 30, so as to prevent the sample 30 from being destroyed due to high temperature. The controller 60 may be implemented by components such as an integrated circuit, a signal processor, a computer or the like.

As an example, the optical device 20 may be integrated in an optical fiber probe 70. The exciting light 11 emitted by the laser 10 may be guided into the optical fiber probe 70 by an importing optical fiber 71. The optical fiber probe 70 transmits the collected Raman light signal to the spectrometer 40 by a collection optical fiber 72. Certainly, the optical device 20 may also be constructed by separate optical elements. However, the optical fiber probe 70 may improve stability of the system.

As an example, the exciting light may also pass through a collimating lens 27 and a narrow band optical filter 28 before arriving at the second beam splitter 25 or the first convergent lens 24. The collimating lens 27 may convert the exciting light into a substantially parallel light beam to improve directivity and optical efficiency. The narrow band optical filter 28 may remove disturbance to enhance the signal to noise ratio of the exciting light in a desired waveband. As an example, in order to fold the light path, one or more deflecting mirrors 29 may also be arranged. As an example, in order that the Raman light signal can better be coupled into the spectrometer 40, the second convergent lens 41 may further be arranged upstream of the collection optical fiber 72.

In addition, it is noted that although only one infrared detector is shown in illustrated embodiments, the present disclosure is not limited to this. In other embodiments, a multi-point detection mode may be applied so that a plurality of temperature sensors (e.g., infrared detectors) are arranged at different positions relative to the sample to more accurately and timely detect the temperature or variation of temperature of the sample. For example, some temperature sensors are located near the sample (for example, located at a side face or rear face of the sample) or in contact with the sample, while other temperature sensors (e.g., infrared detectors) are located relatively far away from the sample, and different sensors may be activated according to specific requirements (e.g., size, shape, position, etc.) of the sample to be detected.

The positions of the infrared detectors or temperature sensors are not limited to those in the above examples, for example, they may be arranged near the spectrometer. Figure 8 shows an arrangement of a Raman spectrum inspection apparatus according to an example, which does not form part of the present invention but contains infomration useful for understanding the present invention. As shown in the Figure, in the Raman spectrum inspection apparatus, an infrared spectrometer is used as the infrared detector, the infrared detector and the spectrometer for detecting the Raman spectrum may be integrated together or provided closely in a same detector, for example in the detector 45 shown in Figure 8, such that a portion (e.g., a detection unit or pixel point)of the detector 45 is configured to detect an infrared signal emitted from the sample 30 during irradiation of the exciting light from the laser onto the sample, while another portion of the detector is configured to detect a Raman spectrum signal from the sample 30, thereby enabling detection of the Raman spectrum and detection of the infrared light at close positions. The beam splitter 25, which is arranged in the Raman light signal collection light path 21, is configured to reflect the exciting light 11 from the laser 10 towards the first convergent lens 24 and transmit at least a part of the reflected light, which is collected by the first convergent lens 24 from the sample 30, through the beam splitter 25, to the detector 45. Optionally, as described above, the light path of the exciting light 11 may be partly coaxial with the Raman light signal collection light path 21, or may be completely separated (independent of), off-axis or offset from the Raman light signal collection light path 21.

It will be understood that the detector 45 described herein may include an array consisted of a plurality of detector elements or units, where a portion of the detector elements or units of the array are used for detecting the infrared signal emitted from the sample, and another portion of the detector elements or units of the array are used for detecting the Raman spectrum signal from the sample. Further, in other implementations, the detector(s) for detecting the Raman spectrum signal from the sample and the detector(s) or sensor(s) for detecting the infrared signal from the sample may be located at substantially the same orientation with respect to the sample, for example, there may be provided at least two independent or separate detectors arranged adjacent to each other or side by side, and they may be positioned symmetrically with respect to the Raman light signal collection light path so as to detect the Raman spectrum signal and the infrared signal from the sample respectively.

In some embodiments of the present disclosure, the security monitor may monitor a surface state of the sample during irradiating of the exciting light from the laser onto the sample, the surface state indicating whether or not the sample is damaged due to being irradiated by the exciting light. The sample will generally generate smog together with slight surface damage (for example, a change in color gray scale or a pit) or ablation before or during burning due to irradiation of the exciting light, and monitoring of these surface states may monitor the security of detection of the sample.

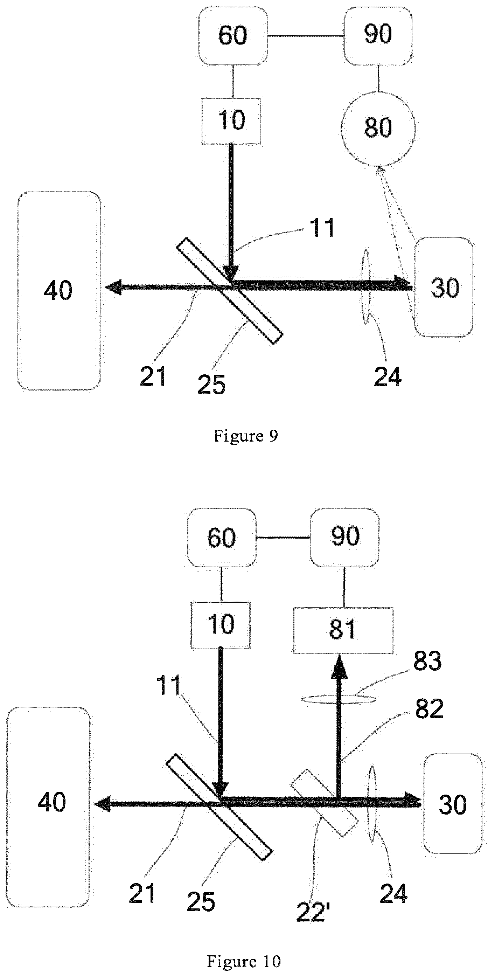

In the example shown in Figure 9, the security monitor comprises an imaging device 80 for capturing an image of a surface of the sample 30, for example, a camera. The imaging device 80 may be arranged near or around the sample 30 to be detected, so as to obtain the image of the surface, onto which the exciting light irradiates, of the sample 30 during the irradiating of the exciting light onto the sample. Exemplarily, during detection of the sample by the Raman spectrum inspection apparatus, the image of the surface of the sample to be detected may be captured by the imaging device in real time, or may be captured discontinuously or periodically at a certain time interval.

The surface state, such as color or gray scale or variation thereof, surface pits and the like, of the detected sample may be viewed or identified based on the obtained image, images which are obtained at different time may be compared to each other so that the surface state of the sample is determined. In an example, which does not form part of the present invention but contains infomration useful for understanding the present invention, as shown in Figure 9, the Raman spectrum inspection apparatus further comprises an image processor 90 and a controller 60, the image processor 90 is configured to process an image obtained by the imaging device 80 so as to determine a change in gray scale of the image of the surface of the sample irradiated by the exciting light. It may be determined that the surface of the sample is damaged or burned if the change in gray scale exceeds a threshold, thereby the controller 60 sends a control signal to the laser 10 so as to reduce the power of the laser or to turn off the laser, ensuring detection security.

In the example, which does not form part of the present invention but contains infomration useful for understanding the present invention, shown in Figure 10, the imaging device may be in form of a CCD device 81, and a beam splitter 22' may be provided in the Raman light signal collection light path 21 to guide a part of the light from the sample 30 along a light path 82 towards the CCD device 81. A convergent lens 83 may be provided in the light path 82 so that the image of the irradiated surface of the sample 30 may be obtained more accurately by the CCD device 81.

In some examples, the light path, which extends from the sample 30 to the imaging device and is arranged for obtaining the image of the surface of the sample irradiated by the exciting light, may be completely independent of or separated from the Raman light signal collection light path, as shown in Figure 9; or, at least a portion of the light path 82, which extends from the sample 30 to the CCD device 81 and is arranged for obtaining the image of the surface of the sample irradiated by the exciting light, may be coaxial with the Raman light signal collection light path 21, as shown in Figure 10.

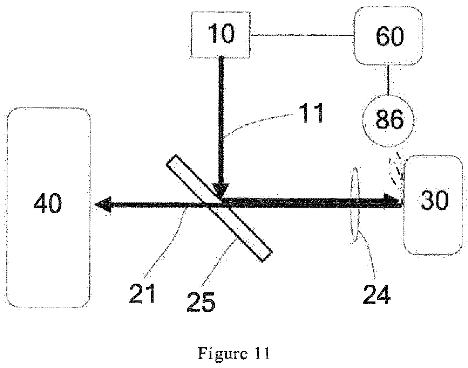

In another exemplary example, which does not form part of the present invention but contains infomration useful for understanding the present invention, as shown in Figure 11, the security monitor for monitoring the surface state of the sample may include a smog detector 86 configured to monitor whether or not the surface of the sample 30 generates smog during irradiating of the exciting light 11 from the laser 10 onto the sample 30. Exemplarily, the smog detector may be positioned at an appropriate distance from the sample so as to be able to timely and accurately detect whether or not the surface of the sample 30 generates smog. The controller 60 will send a control signal to the laser 10 so as to reduce the power of the laser or to turn off the laser if it is monitored by the smog detector 86 that the surface of the sample 30 generates smog.

It will be understood that although different arrangements for monitoring the security state of the sample are illustrated in the shown embodiments, such as the temperature sensor (e.g., an infrared detector), the imaging device, the smog detector and the like, the present disclosure is not limited to those. In other embodiments, other appropriate security monitoring arrangements may also be adopted. Further, a multi-point detection mode may be applied so that a plurality of temperature sensors (e.g., infrared detectors), imaging devices, smog detectors or a combination thereof are arranged at different positions relative to the sample to more accurately and timely monitor the security state of the sample during the inspection.

An embodiment of the present disclosure also provides a method 200 of monitoring a detection security of a Raman spectrum inspection apparatus. As shown in Figure 6, the method 200 may include:
Step S10: emitting an exciting light by a laser;
Step S20: guiding the exciting light to a sample and collecting a Raman light signal from the sample; and
Step S30: monitoring a security state of the sample during irradiating of the exciting light from the laser onto the sample, and providing a security indicating signal representing whether or not the sample is damaged due to being irradiated by the exciting light.

In some embodiments, the step S30 may comprise sensing a temperature or a variation of temperature of the detected sample during irradiating of the exciting light from the laser onto the sample. Exemplarily, radiation energy of infrared light emitted from the sample may be detected by an infrared detector to monitor the temperature or the variation of temperature of the sample. The method may be used to monitor the temperature or variation of temperature of the sample when the Raman spectrum inspection apparatus works.

In other embodiments, the step S30 may comprise monitoring a surface state of the sample during irradiating of the exciting light from the laser onto the sample, the surface state indicating whether or not the sample is damaged due to being irradiated by the exciting light. Exemplarily, during irradiating of the exciting light from the laser onto the sample, the image of the surface of the sample irradiated by the exciting light may be obtained, and the obtained image is processed so as to determine a change in gray scale of the image of the surface of the sample.

Additionally, it may monitor whether or not the surface of the sample generates smog during irradiating of the exciting light from the laser onto the sample, so as to monitor the surface state of the sample.

As an example, the method 200 may further comprise:
Step S40: sending a control signal to the laser so as to reduce the power of the laser or to turn off the laser if the security indicating signal indicates that the security of the sample is affected by the detection performed to the sample. In some embodiments, when the sensed temperature or variation of temperature of the sample exceeds a threshold (for example, when the temperature of the sample is higher than a predetermined threshold), a control signal is sent to the laser to reduce the power of the laser or to turn off the laser. Exemplarily, if a radiation energy of the infrared light detected by the infrared detector exceeds a predetermined threshold, a control signal is sent to the laser to reduce the power of the laser or to turn off the laser. In other embodiments, if the determined change in gray scale of the surface of the sample exceeds a threshold, and / or if it is monitored that the surface of the sample generates smog, a control signal is sent to the laser to reduce the power of the laser or to turn off the laser.

The step S40 may be used to monitor whether or not the temperature of the sample is greater than the predetermined threshold (the predetermined threshold may for example be 80 Celsius degrees, 100 Celsius degrees, 150 Celsius degrees, or the like, and may be determined depending on the sample 30) in real-time when the Raman spectrum inspection apparatus works, so as to ensure security of the detection operation.

As an example, the monitoring method 200 may further include:
Step S50: turning off the laser after the laser emits the exciting light for a predetermined period, and determining security of the sample according to variation of temperature of the sample irradiated by the exciting light within the predetermined period.

The step S50 may be used to estimate security of the detection before the Raman spectrum detection operation is practically carried out. The predetermined period may for example be 0.5 second, 1 second, 3 seconds, or the like. If it is estimated that the temperature of the sample may be too high, Raman inspection parameters (for example laser power, position of the sample, or the like) may be controlled deliberately, so as to avoid security risk in the practical inspection.

In the embodiments of the present disclosure, any one of the step S40 and step S50 may be used separately, or they may be used in combination. The dashed parts in Figure 6 represent optional steps.

In the embodiments of the present disclosure, the security state of the sample may be monitored in real time during the Raman inspection; or, by emitting exciting light for a short time before the Raman inspection, it may be determined whether or not the applied exciting light would damage the sample so as to judge the detection security of the sample, then parameters (e.g., power of the laser) for the Raman inspection may be controlled accordingly to ensure detection security.

The above description has explained various embodiments of the above Raman spectrum inspection apparatus and monitoring method thereof by schematic diagrams, flow charts and/or examples. In case that the schematic diagrams, flow charts and/or examples each include one or more functions and/or operations, the skilled person in the art should understand that each function and/or operation in such schematic diagrams, flow charts and/or examples may be implemented separately and/or collectively by various structures, hardware, software, firmware or any combination of them in essential. In an embodiment, some parts of the subject of the embodiment of the present disclosure may be implemented by Application Specific Integrated Circuits (ASIC), Field Programmable Gate Arrays (FPGA), Digital Signal Processors (DSP) or other integrated forms. However, the skilled person in the art should understand that some aspects of the embodiments disclosed herein may be implemented equally in the integrated circuit entirely or partly, implemented as one or more computer programs running on one or more computers (for example, implemented as one or more programs running on one or more computer systems), implemented as one or more programs running on one or more processors (for example, implemented as one or more programs running on one or more microprocessors), implemented as firmware, or implemented as any combination of the above methods in essential. From the present disclosure, the skilled person in the art has capability of designing circuits and/or writing software and/or firmware codes. Furthermore, the skilled person in the art will appreciate that the mechanism of the subject of the present disclosure may be delivered as various forms of program products, and the exemplified embodiments of the subject of the present disclosure may be applicable independent of the specific types of the signal carrying media that perform the delivery in practice. Examples of the signal carrying media include, but not limited to: recordable media, such as a floppy disc, a hard disk drive, an optical disc (CD, DVD), a digital magnetic tape, a computer memory or the like; and transmission media such as digital and/or analogue communication media (for example, an optical fiber cable, a wave guide, a wired communication link, a wireless communication link or the like).

## Claims

1. A Raman spectrum inspection apparatus, comprising:
a laser (10) configured to emit exciting light (11);
an optical device (20) configured to guide the exciting light (11) to a sample (30) and collect a light signal from the sample (30);
a spectrometer (40) configured to split the light signal collected by the optical device (20) so as to generate a Raman spectrum of the sample (30) which is detected; and
a security monitor configured to monitor a security state of the sample (30) during irradiating of the exciting light (11) from the laser (10) onto the sample (30), and to provide a security indicating signal representing whether or not the sample (30) is damaged due to being irradiated by the exciting light (11),
wherein the optical device (20) further comprises:
a first beam splitter (22), a second beam splitter (25), a first convergent lens (24), a second convergent lens (41),
a Raman scattering light signal collecting optical path (21) configured to collect the light signal from an object and an infrared light collecting optical path (23) configured to collect the infrared light from the object;
wherein the exciting light (11) from the laser (10) reaches the sample (30) through the first convergent lens (24) after being reflected by the second beam splitter (25), such that the light signal is generated by the sample (30);
wherein the light signal generated by the sample (30) reaches the spectrometer (40) through the Raman scattering light signal collecting optical path (21), and the light signal generated by the sample (30) reaches the security monitor through the infrared light collecting optical path (23);
wherein the Raman scattering light signal collecting optical path (21) is an optical path from the sample (30) to the spectrometer (40), sequentially passing the first convergent lens (24), the second beam splitter (25), the first beam splitter (22) and the second convergent lens (41), and the infrared light collecting optical path (23) is an optical path from the sample to the security monitor, sequentially passing the first convergent lens (24), the second beam splitter (25) and the first beam splitter (22);
wherein the first beam splitter (22) is a short pass dichroic beam splitter configured to transmit Raman scattering light in light from the second beam splitter (25) toward the second convergent lens (41), and the first beam splitter (22) is configured to reflect infrared light in the light from the second beam splitter (25) toward the security monitor; and
wherein the second beam splitter (25) is a long pass dichroic beam splitter configured to reflect the exciting light (11) from the laser (10) toward the first convergent lens (24), and the second beam splitter (25) is configured to transmit light from the first convergent lens (24) toward the first beam splitter (22), after filtering out Rayleigh scattering light in the light from the first convergent lens (24),
wherein the security monitor comprises a temperature sensor configured to sense a temperature or a variation of temperature of the detected sample (30) during irradiating of the exciting light (11) from the laser (10) onto the sample (30), the temperature sensor comprising an infrared detector configured to detect infrared light emitted from the sample so as to obtain the temperature or variation of temperature of the detected sample.

2. The Raman spectrum inspection apparatus according to claim 1, wherein the security monitor comprises a plurality of said temperature sensors positioned at different locations with respect to the sample (30) for sensing the temperature or the variation of temperature of the sample (30).

3. The Raman spectrum inspection apparatus according to claim 2, wherein the temperature sensor comprises a contact type temperature sensor configured to contact a predetermined position of the sample (30) and to transmit temperature information of the sample (30) in a wired way or wirelessly.

4. The Raman spectrum inspection apparatus according to any one of claims 1 to 3, wherein the Raman spectrum inspection apparatus further comprises a controller (60) configured to send a control signal to the laser (10) so as to reduce a power of the laser (10) or to turn off the laser (10) if the security indicating signal provided by the security monitor indicates that a security of the sample (30) is affected by a detection performed to the sample (30).

5. The Raman spectrum inspection apparatus according to any one of claims 1 to 4, wherein the Raman spectrum inspection apparatus further comprises a controller (10) configured to send a control signal to the laser (10) so as to reduce a power of the laser (10) or to turn off the laser (10) if the temperature or variation of temperature of the sample (30) sensed by the temperature sensor exceeds a threshold.

6. The Raman spectrum inspection apparatus according to any one of claims 1 to 4, wherein the security monitor is further configured to monitor a surface state of the sample (30) during irradiating of the exciting light (11) from the laser (10) onto the sample (30), the surface state indicating whether or not the sample (30) is damaged due to being irradiated by the exciting light (11).

7. The Raman spectrum inspection apparatus according to claim 6, wherein the security monitor comprises an imaging device (80) for capturing an image of a surface of the sample (30).

8. The Raman spectrum inspection apparatus according to claim 7, wherein the optical device (20) is configured to establish a Raman light signal collection light path (21) for collecting the light signal from the sample (30), and
an image capturing light path, which extends from the sample (30) to the imaging device (80) and is configured for capturing the image of the surface of the sample (30), is completely independent of the Raman light signal collection light path (21), or at least a portion of the image capturing light path is coaxial with the Raman light signal collection light path (21).

9. The Raman spectrum inspection apparatus according to claim 7 or 8, further comprising:
an image processor (90) configured to process an image obtained by a camera so as to determine a change in gray scale of the image of the surface of the sample (30); and
a controller (60) configured to send a control signal to the laser (11) so as to reduce a power of the laser (11) or to turn off the laser (11) if the change in gray scale exceeds a threshold.

10. The Raman spectrum inspection apparatus according to claim 6, wherein
the security monitor comprises a smog detector (86) configured to monitor whether or not a surface of the sample (30) generates smog during irradiating of the exciting light (11) from the laser (10) onto the sample (30), and
the Raman spectrum inspection apparatus further comprises a controller (60) configured to send a control signal to the laser (10) so as to reduce a power of the laser (10) or to turn off the laser (10) if it is monitored by the smog detector (86) that the surface of the sample (30) generates smog.

11. A method of monitoring a detection security of a Raman spectrum inspection apparatus, comprising:
emitting exciting light (11) by a laser (10);
guiding the exciting light (11) to a sample (30) and collecting a light signal from the sample (30) by an optical device (20); and
monitoring a security state of the sample (30) during irradiating of the exciting light (11) from the laser (10) onto the sample (30), and providing a security indicating signal representing whether or not the sample (30) is damaged due to being irradiated by the exciting light (11),
wherein the optical device (20) further comprises:
a first beam splitter (22), a second beam splitter (25), a first convergent lens (24), a second convergent lens (41),
a Raman scattering light signal collecting optical path (21) configured to collect the light signal from an object and an infrared light collecting optical path (23) configured to collect the infrared light from the object;
wherein the exciting light (11) from the laser (10) reaches the sample (30) through the first convergent lens (24) after being reflected by the second beam splitter (25), such that the light signal is generated by the sample (30);
wherein the light signal generated by the sample (30) reaches the spectrometer (40) through the Raman scattering light signal collecting optical path (21), and the light signal generated by the sample (30) reaches the security monitor through the infrared light collecting optical path (23);
wherein the Raman scattering light signal collecting optical path (21) is an optical path from the sample (30) to the spectrometer (40), sequentially passing the first convergent lens (24), the second beam splitter (25), the first beam splitter (22) and the second convergent lens (41), and the infrared light collecting optical path (23) is an optical path from the sample to the security monitor, sequentially passing the first convergent lens (24), the second beam splitter (25) and the first beam splitter (22);
wherein the first beam splitter (22) is a short pass dichroic beam splitter configured to transmit Raman scattering light in light from the second beam splitter (25) toward the second convergent lens (41), and the first beam splitter (22) is configured to reflect infrared light in the light from the second beam splitter (25) toward the security monitor; and
wherein the second beam splitter (25) is a long pass dichroic beam splitter configured to reflect the exciting light (11) from the laser (10) toward the first convergent lens (24), and the second beam splitter (25) is configured to transmit light from the first convergent lens (24) toward the first beam splitter (22), after filtering out Rayleigh scattering light in the light from the first convergent lens (24),
wherein the security monitor comprises a temperature sensor configured to sense a temperature or a variation of temperature of the detected sample (30) during irradiating of the exciting light (11) from the laser (10) onto the sample (30), the temperature sensor comprising an infrared detector configured to detect infrared light emitted from the sample so as to obtain the temperature or variation of temperature of the detected sample.

12. The method according to claim 11, further comprising:
sending a control signal to the laser (10) so as to reduce a power of the laser (10) or to turn off the laser (10) if the security indicating signal indicates that a security of the sample (30) is affected by a detection performed to the sample (30).

13. The method according to claim 12, wherein the monitoring a security state of the sample (30) comprises:
sensing a temperature or a variation of temperature of the detected sample (30) during irradiating of the exciting light (11) from the laser (10) onto the sample (30); and
sending the control signal to the laser (10) so as to reduce the power of the laser (10) or to turn off the laser (10) if the sensed temperature or variation of temperature of the sample (30) exceeds a threshold.

## Patentansprüche

1. Eine Raman-Spektrum-Prüfvorrichtung, umfassend:
einen Laser (10), der dazu konfiguriert ist, Anregungslicht (11) zu emittieren;
eine optische Vorrichtung (20), die dazu konfiguriert ist, das Anregungslicht (11) zu einer Probe (30) zu führen und ein Lichtsignal von der Probe (30) zu sammeln;
ein Spektrometer (40), das dazu konfiguriert ist, das von der optischen Vorrichtung (20) gesammelte Lichtsignal aufzuteilen, um ein Raman-Spektrum der Probe (30), das detektiert wird, zu erzeugen; und
eine Sicherheitsüberwachungseinrichtung, die dazu konfiguriert ist, einen Sicherheitszustand der Probe (30) zu überwachen, während das Anregungslicht (11) von dem Laser (10) auf die Probe (30) gestrahlt wird, und ein Sicherheitshinweissignal bereitzustellen, das angibt, ob die Probe (30) dadurch beschädigt wird oder nicht, dass sie mit dem Anregungslicht (11) bestrahlt wird,
wobei die optische Vorrichtung (20) ferner umfasst:
einen ersten Strahlteiler (22), einen zweiten Strahlteiler (25), eine erste Sammellinse (24), eine zweite Sammellinse (41),
einen optischen Raman-Streulichtsignal-Sammelpfad (21), der dazu konfiguriert ist, das Lichtsignal von einem Objekt zu sammeln, und einen optischen Infrarotlicht-Sammelpfad (23), der dazu konfiguriert ist, das Infrarotlicht von dem Objekt zu sammeln;
wobei das Anregungslicht (11) von dem Laser (10), nachdem es von dem zweiten Strahlteiler (25) reflektiert wurde, durch die erste Sammellinse (24) die Probe (30) erreicht, sodass das Lichtsignal von der Probe (30) erzeugt wird;
wobei das von der Probe (30) erzeugte Lichtsignal durch den optischen Raman-Streulichtsignal-Sammelpfad (21) das Spektrometer (40) erreicht und das von der Probe (30) erzeugte Lichtsignal durch den optischen Infrarotlicht-Sammelpfad (23) die Sicherheitsüberwachungseinrichtung erreicht;
wobei der optische Raman-Streulichtsignal-Sammelpfad (21) ein optischer Pfad von der Probe (30) zu dem Spektrometer (40) ist, der nacheinander durch die erste Sammellinse (24), den zweiten Strahlteiler (25), den ersten Strahlteiler (22) und die zweite Sammellinse (41) verläuft, und der optische Infrarotlicht-Sammelpfad (23) ein optischer Pfad von der Probe zu der Sicherheitsüberwachungseinrichtung ist, der nacheinander durch die erste Sammellinse (24), den zweiten Strahlteiler (25) und den ersten Strahlteiler (22) verläuft;
wobei der erste Strahlteiler (22) ein dichroitischer Kurzpass-Strahlteiler ist, der dazu konfiguriert ist, Raman-Streulicht in Licht von dem zweiten Strahlteiler (25) zu der zweiten Sammellinse (41) durchzulassen, und der erste Strahlteiler (22) dazu konfiguriert ist, Infrarotlicht in dem Licht von dem zweiten Strahlteiler (25) zu der Sicherheitsüberwachungseinrichtung zu reflektieren; und
wobei der zweite Strahlteiler (25) ein dichroitischer Langpass-Strahlteiler ist, der dazu konfiguriert ist, das Anregungslicht (11) von dem Laser (10) zu der ersten Sammellinse (24) zu reflektieren, und der zweite Strahlteiler (25) dazu konfiguriert ist, Licht von der ersten Sammellinse (24) zu dem ersten Strahlteiler (22) durchzulassen, nachdem Rayleigh-Streulicht in dem Licht von der ersten Sammellinse (24) herausgefiltert wurde,
wobei die Sicherheitsüberwachungseinrichtung einen Temperatursensor umfasst, der dazu konfiguriert ist, eine Temperatur oder eine Temperaturänderung der untersuchten Probe (30) zu erfassen, während das Anregungslicht (11) von dem Laser (10) auf die Probe (30) gestrahlt wird, wobei der Temperatursensor einen Infrarotdetektor umfasst, der dazu konfiguriert ist, von der Probe emittiertes Infrarotlicht zu detektieren, um die Temperatur oder Temperaturänderung der untersuchten Probe zu erhalten.

2. Die Raman-Spektrum-Prüfvorrichtung nach Anspruch 1, wobei die Sicherheitsüberwachungseinrichtung eine Vielzahl der genannten Temperatursensoren umfasst, die in Bezug auf die Probe (30) an unterschiedlichen Positionen angeordnet sind, um die Temperatur oder die Temperaturänderung der Probe (30) zu erfassen.

3. Die Raman-Spektrum-Prüfvorrichtung nach Anspruch 2, wobei der Temperatursensor einen Temperatursensor des Kontakttyps umfasst, der dazu konfiguriert ist, eine vorbestimmte Position der Probe (30) zu kontaktieren und Temperaturinformationen der Probe (30) drahtgebunden oder drahtlos zu senden.

4. Die Raman-Spektrum-Prüfvorrichtung nach einem der Ansprüche 1 bis 3, wobei die Raman-Spektrum-Prüfvorrichtung ferner eine Steuereinrichtung (60) umfasst, die dazu konfiguriert ist, ein Steuersignal an den Laser (10) zu senden, um eine Leistung des Lasers (10) zu verringern oder den Laser (10) abzuschalten, wenn das von der Sicherheitsüberwachungseinrichtung bereitgestellte Sicherheitshinweissignal angibt, dass eine Sicherheit der Probe (30) durch eine an der Probe (30) durchgeführte Detektion beeinträchtigt ist.

5. Die Raman-Spektrum-Prüfvorrichtung nach einem der Ansprüche 1 bis 4, wobei die Raman-Spektrum-Prüfvorrichtung ferner eine Steuereinrichtung (10) umfasst, die dazu konfiguriert ist, ein Steuersignal an den Laser (10) zu senden, um eine Leistung des Lasers (10) zu verringern oder den Laser (10) abzuschalten, wenn die von dem Temperatursensor erfasste Temperatur oder Temperaturänderung der Probe (30) einen Schwellenwert überschreitet.

6. Die Raman-Spektrum-Prüfvorrichtung nach einem der Ansprüche 1 bis 4, wobei die Sicherheitsüberwachungseinrichtung ferner dazu konfiguriert ist, einen Oberflächenzustand der Probe (30) zu überwachen, während das Anregungslicht (11) von dem Laser (10) auf die Probe (30) gestrahlt wird, wobei der Oberflächenzustand angibt, ob die Probe (30) dadurch beschädigt wird oder nicht, dass sie mit dem Anregungslicht (11) bestrahlt wird.

7. Die Raman-Spektrum-Prüfvorrichtung nach Anspruch 6, wobei die Sicherheitsüberwachungseinrichtung eine Bildgebungsvorrichtung (80) zum Aufnehmen eines Bildes einer Oberfläche der Probe (30) umfasst.

8. Die Raman-Spektrum-Prüfvorrichtung nach Anspruch 7, wobei die optische Vorrichtung (20) dazu konfiguriert ist, einen Raman-Lichtsignal-Sammellichtpfad (21) zum Sammeln des Lichtsignals von der Probe (30) einzurichten, und
ein Bildaufnahme-Lichtpfad, der sich von der Probe (30) zu der Bildgebungsvorrichtung (80) erstreckt und zum Aufnehmen des Bildes der Oberfläche der Probe (30) konfiguriert ist, vollständig unabhängig von dem Raman-Lichtsignal-Sammellichtpfad (21) ist, oder mindestens ein Abschnitt des Bildaufnahme-Lichtpfads koaxial zu dem Raman-Lichtsignal-Sammellichtpfad (21) ist.

9. Die Raman-Spektrum-Prüfvorrichtung nach Anspruch 7 oder 8, ferner umfassend:
einen Bildprozessor (90), der dazu konfiguriert ist, ein von einer Kamera erhaltenes Bild zu verarbeiten, um eine Änderung des Grauwerts des Bildes der Oberfläche der Probe (30) zu bestimmen; und
eine Steuereinrichtung (60), die dazu konfiguriert ist, ein Steuersignal an den Laser (11) zu senden, um eine Leistung des Lasers (11) zu verringern oder den Laser (11) abzuschalten, wenn die Änderung des Grauwerts einen Schwellenwert überschreitet.

10. Die Raman-Spektrum-Prüfvorrichtung nach Anspruch 6, wobei
die Sicherheitsüberwachungseinrichtung einen Smogdetektor (86) umfasst, der dazu konfiguriert ist, zu überwachen, ob eine Oberfläche der Probe (30) Smog erzeugt oder nicht, während das Anregungslicht (11) von dem Laser (10) auf die Probe (30) gestrahlt wird, und
die Raman-Spektrum-Prüfvorrichtung ferner eine Steuereinrichtung (60) umfasst, die dazu konfiguriert ist, ein Steuersignal an den Laser (10) zu senden, um eine Leistung des Lasers (10) zu verringern oder den Laser (10) abzuschalten, wenn von dem Smogdetektor (86) überwacht wird, dass die Oberfläche der Probe (30) Smog erzeugt.

11. Ein Verfahren zum Überwachen einer Detektionssicherheit einer Raman-Spektrum-Prüfvorrichtung, umfassend:
Emittieren von Anregungslicht (11) durch einen Laser (10);
Führen des Anregungslichts (11) zu einer Probe (30) und Sammeln eines Lichtsignals von der Probe (30) durch eine optische Vorrichtung (20); und
Überwachen eines Sicherheitszustands der Probe (30), während das Anregungslicht (11) von dem Laser (10) auf die Probe (30) gestrahlt wird, und Bereitstellen eines Sicherheitshinweissignals, das angibt, ob die Probe (30) dadurch beschädigt wird oder nicht, dass sie mit dem Anregungslicht (11) bestrahlt wird,
wobei die optische Vorrichtung (20) ferner umfasst:
einen ersten Strahlteiler (22), einen zweiten Strahlteiler (25), eine erste Sammellinse (24), eine zweite Sammellinse (41),
einen optischen Raman-Streulichtsignal-Sammelpfad (21), der dazu konfiguriert ist, das Lichtsignal von einem Objekt zu sammeln, und einen optischen Infrarotlicht-Sammelpfad (23), der dazu konfiguriert ist, das Infrarotlicht von dem Objekt zu sammeln;
wobei das Anregungslicht (11) von dem Laser (10), nachdem es von dem zweiten Strahlteiler (25) reflektiert wurde, durch die erste Sammellinse (24) die Probe (30) erreicht, sodass das Lichtsignal von der Probe (30) erzeugt wird;
wobei das von der Probe (30) erzeugte Lichtsignal durch den optischen Raman-Streulichtsignal-Sammelpfad (21) das Spektrometer (40) erreicht und das von der Probe (30) erzeugte Lichtsignal durch den optischen Infrarotlicht-Sammelpfad (23) die Sicherheitsüberwachungseinrichtung erreicht;
wobei der optische Raman-Streulichtsignal-Sammelpfad (21) ein optischer Pfad von der Probe (30) zu dem Spektrometer (40) ist, der nacheinander durch die erste Sammellinse (24), den zweiten Strahlteiler (25), den ersten Strahlteiler (22) und die zweite Sammellinse (41) verläuft, und der optische Infrarotlicht-Sammelpfad (23) ein optischer Pfad von der Probe zu der Sicherheitsüberwachungseinrichtung ist, der nacheinander durch die erste Sammellinse (24), den zweiten Strahlteiler (25) und den ersten Strahlteiler (22) verläuft;
wobei der erste Strahlteiler (22) ein dichroitischer Kurzpass-Strahlteiler ist, der dazu konfiguriert ist, Raman-Streulicht in Licht von dem zweiten Strahlteiler (25) zu der zweiten Sammellinse (41) durchzulassen, und der erste Strahlteiler (22) dazu konfiguriert ist, Infrarotlicht in dem Licht von dem zweiten Strahlteiler (25) zu der Sicherheitsüberwachungseinrichtung zu reflektieren; und
wobei der zweite Strahlteiler (25) ein dichroitischer Langpass-Strahlteiler ist, der dazu konfiguriert ist, das Anregungslicht (11) von dem Laser (10) zu der ersten Sammellinse (24) zu reflektieren, und der zweite Strahlteiler (25) dazu konfiguriert ist, Licht von der ersten Sammellinse (24) zu dem ersten Strahlteiler (22) durchzulassen, nachdem Rayleigh-Streulicht in dem Licht von der ersten Sammellinse (24) herausgefiltert wurde,
wobei die Sicherheitsüberwachungseinrichtung einen Temperatursensor umfasst, der dazu konfiguriert ist, eine Temperatur oder eine Temperaturänderung der untersuchten Probe (30) zu erfassen, während das Anregungslicht (11) von dem Laser (10) auf die Probe (30) gestrahlt wird, wobei der Temperatursensor einen Infrarotdetektor umfasst, der dazu konfiguriert ist, von der Probe emittiertes Infrarotlicht zu detektieren, um die Temperatur oder Temperaturänderung der untersuchten Probe zu erhalten.

12. Das Verfahren nach Anspruch 11, ferner umfassend:
Senden eines Steuersignals an den Laser (10), um eine Leistung des Lasers (10) zu verringern oder den Laser (10) abzuschalten, wenn das Sicherheitshinweissignal angibt, dass eine Sicherheit der Probe (30) durch eine an der Probe (30) durchgeführte Detektion beeinträchtigt ist.

13. Das Verfahren nach Anspruch 12, wobei das Überwachen eines Sicherheitszustands der Probe (30) umfasst:
Erfassen einer Temperatur oder einer Temperaturänderung der untersuchten Probe (30), während das Anregungslicht (11) von dem Laser (10) auf die Probe (30) gestrahlt wird; und
Senden des Steuersignals an den Laser (10), um die Leistung des Lasers (10) zu verringern oder den Laser (10) abzuschalten, wenn die erfasste Temperatur oder Temperaturänderung der Probe (30) einen Schwellenwert überschreitet.

## Revendications

1. Un appareil d'inspection de spectre Raman, comprenant :
un laser (10) configuré pour émettre de la lumière d'excitation (11) ;
un dispositif optique (20) configuré pour guider la lumière d'excitation (11) vers un échantillon (30) et collecter un signal lumineux provenant de l'échantillon (30) ;
un spectromètre (40) configuré pour séparer le signal lumineux collecté par le dispositif optique (20) de manière à générer un spectre Raman de l'échantillon (30) qui est détecté ; et
un dispositif de surveillance de sécurité configuré pour surveiller un état de sécurité de l'échantillon (30) pendant l'irradiation de l'échantillon (30) par la lumière d'excitation (11) provenant du laser (10), et pour fournir un signal indicateur de sécurité représentant si l'échantillon (30) est ou non endommagé du fait de son irradiation par la lumière d'excitation (11),
dans lequel le dispositif optique (20) comprend en outre :
un premier séparateur de faisceau (22), un second séparateur de faisceau (25), une première lentille convergente (24), une seconde lentille convergente (41),
un trajet optique de collecte de signal lumineux de diffusion Raman (21) configuré pour collecter le signal lumineux provenant d'un objet et un trajet optique de collecte de lumière infrarouge (23) configuré pour collecter la lumière infrarouge provenant de l'objet ;
dans lequel la lumière d'excitation (11) provenant du laser (10) atteint l'échantillon (30) à travers la première lentille convergente (24) après avoir été réfléchie par le second séparateur de faisceau (25), de sorte que le signal lumineux est généré par l'échantillon (30) ;
dans lequel le signal lumineux généré par l'échantillon (30) atteint le spectromètre (40) par le trajet optique de collecte de signal lumineux de diffusion Raman (21), et le signal lumineux généré par l'échantillon (30) atteint le dispositif de surveillance de sécurité par le trajet optique de collecte de lumière infrarouge (23) ;
dans lequel le trajet optique de collecte de signal lumineux de diffusion Raman (21) est un trajet optique allant de l'échantillon (30) au spectromètre (40), passant séquentiellement par la première lentille convergente (24), le second séparateur de faisceau (25), le premier séparateur de faisceau (22) et la seconde lentille convergente (41), et le trajet optique de collecte de lumière infrarouge (23) est un trajet optique allant de l'échantillon au dispositif de surveillance de sécurité, passant séquentiellement par la première lentille convergente (24), le second séparateur de faisceau (25) et le premier séparateur de faisceau (22) ;
dans lequel le premier séparateur de faisceau (22) est un séparateur de faisceau dichroïque passe-court configuré pour transmettre la lumière de diffusion Raman dans la lumière provenant du second séparateur de faisceau (25) vers la seconde lentille convergente (41), et le premier séparateur de faisceau (22) est configuré pour réfléchir la lumière infrarouge dans la lumière provenant du second séparateur de faisceau (25) vers le dispositif de surveillance de sécurité ; et
dans lequel le second séparateur de faisceau (25) est un séparateur de faisceau dichroïque passe-long configuré pour réfléchir la lumière d'excitation (11) provenant du laser (10) vers la première lentille convergente (24), et le second séparateur de faisceau (25) est configuré pour transmettre la lumière provenant de la première lentille convergente (24) vers le premier séparateur de faisceau (22), après filtrage de la lumière de diffusion Rayleigh dans la lumière provenant de la première lentille convergente (24),
dans lequel le dispositif de surveillance de sécurité comprend un capteur de température configuré pour détecter une température ou une variation de température de l'échantillon détecté (30) pendant l'irradiation de l'échantillon (30) par la lumière d'excitation (11) provenant du laser (10), le capteur de température comprenant un détecteur infrarouge configuré pour détecter la lumière infrarouge émise par l'échantillon afin d'obtenir la température ou la variation de température de l'échantillon détecté.

2. L'appareil d'inspection de spectre Raman selon la revendication 1, dans lequel le dispositif de surveillance de sécurité comprend une pluralité desdits capteurs de température positionnés à différents emplacements par rapport à l'échantillon (30) pour détecter la température ou la variation de température de l'échantillon (30).

3. L'appareil d'inspection de spectre Raman selon la revendication 2, dans lequel le capteur de température comprend un capteur de température de type à contact configuré pour entrer en contact avec une position prédéterminée de l'échantillon (30) et pour transmettre des informations de température de l'échantillon (30) de manière filaire ou sans fil.

4. L'appareil d'inspection de spectre Raman selon l'une quelconque des revendications 1 à 3, dans lequel l'appareil d'inspection de spectre Raman comprend en outre un contrôleur (60) configuré pour envoyer un signal de commande au laser (10) de manière à réduire une puissance du laser (10) ou à éteindre le laser (10) si le signal indicateur de sécurité fourni par le dispositif de surveillance de sécurité indique qu'une sécurité de l'échantillon (30) est affectée par une détection effectuée sur l'échantillon (30).

5. L'appareil d'inspection de spectre Raman selon l'une quelconque des revendications 1 à 4, dans lequel l'appareil d'inspection de spectre Raman comprend en outre un contrôleur (10) configuré pour envoyer un signal de commande au laser (10) de manière à réduire une puissance du laser (10) ou à éteindre le laser (10) si la température ou la variation de température de l'échantillon (30) détectée par le capteur de température dépasse un seuil.

6. L'appareil d'inspection de spectre Raman selon l'une quelconque des revendications 1 à 4, dans lequel le dispositif de surveillance de sécurité est en outre configuré pour surveiller un état de surface de l'échantillon (30) pendant l'irradiation de l'échantillon (30) par la lumière d'excitation (11) provenant du laser (10), l'état de surface indiquant si l'échantillon (30) est ou non endommagé du fait de son irradiation par la lumière d'excitation (11).

7. L'appareil d'inspection de spectre Raman selon la revendication 6, dans lequel le dispositif de surveillance de sécurité comprend un dispositif d'imagerie (80) destiné à capturer une image d'une surface de l'échantillon (30).

8. L'appareil d'inspection de spectre Raman selon la revendication 7, dans lequel le dispositif optique (20) est configuré pour établir un trajet lumineux de collecte de signal lumineux Raman (21) destiné à collecter le signal lumineux provenant de l'échantillon (30), et
un trajet lumineux de capture d'image, qui s'étend de l'échantillon (30) au dispositif d'imagerie (80) et est configuré pour capturer l'image de la surface de l'échantillon (30), est complètement indépendant du trajet lumineux de collecte de signal lumineux Raman (21), ou au moins une partie du trajet lumineux de capture d'image est coaxiale avec le trajet lumineux de collecte de signal lumineux Raman (21).

9. L'appareil d'inspection de spectre Raman selon la revendication 7 ou 8, comprenant en outre :
un processeur d'image (90) configuré pour traiter une image obtenue par une caméra de manière à déterminer une variation de niveau de gris de l'image de la surface de l'échantillon (30) ; et
un contrôleur (60) configuré pour envoyer un signal de commande au laser (11) de manière à réduire une puissance du laser (11) ou à éteindre le laser (11) si la variation de niveau de gris dépasse un seuil.

10. L'appareil d'inspection de spectre Raman selon la revendication 6, dans lequel le dispositif de surveillance de sécurité comprend un détecteur de fumée (86) configuré pour surveiller si une surface de l'échantillon (30) génère ou non de la fumée pendant l'irradiation de l'échantillon (30) par la lumière d'excitation (11) provenant du laser (10), et
l'appareil d'inspection de spectre Raman comprend en outre un contrôleur (60) configuré pour envoyer un signal de commande au laser (10) de manière à réduire une puissance du laser (10) ou à éteindre le laser (10) s'il est constaté par le détecteur de fumée (86) que la surface de l'échantillon (30) génère de la fumée.

11. Un procédé de surveillance d'une sécurité de détection d'un appareil d'inspection de spectre Raman, comprenant :
l'émission de lumière d'excitation (11) par un laser (10) ;
le guidage de la lumière d'excitation (11) vers un échantillon (30) et la collecte d'un signal lumineux provenant de l'échantillon (30) par un dispositif optique (20) ; et
la surveillance d'un état de sécurité de l'échantillon (30) pendant l'irradiation de l'échantillon (30) par la lumière d'excitation (11) provenant du laser (10), et la fourniture d'un signal indicateur de sécurité représentant si l'échantillon (30) est ou non endommagé du fait de son irradiation par la lumière d'excitation (11),
dans lequel le dispositif optique (20) comprend en outre :
un premier séparateur de faisceau (22), un second séparateur de faisceau (25), une première lentille convergente (24), une seconde lentille convergente (41),
un trajet optique de collecte de signal lumineux de diffusion Raman (21) configuré pour collecter le signal lumineux provenant d'un objet et un trajet optique de collecte de lumière infrarouge (23) configuré pour collecter la lumière infrarouge provenant de l'objet ;
dans lequel la lumière d'excitation (11) provenant du laser (10) atteint l'échantillon (30) à travers la première lentille convergente (24) après avoir été réfléchie par le second séparateur de faisceau (25), de sorte que le signal lumineux est généré par l'échantillon (30) ;
dans lequel le signal lumineux généré par l'échantillon (30) atteint le spectromètre (40) par le trajet optique de collecte de signal lumineux de diffusion Raman (21), et le signal lumineux généré par l'échantillon (30) atteint le dispositif de surveillance de sécurité par le trajet optique de collecte de lumière infrarouge (23) ;
dans lequel le trajet optique de collecte de signal lumineux de diffusion Raman (21) est un trajet optique allant de l'échantillon (30) au spectromètre (40), passant séquentiellement par la première lentille convergente (24), le second séparateur de faisceau (25), le premier séparateur de faisceau (22) et la seconde lentille convergente (41), et le trajet optique de collecte de lumière infrarouge (23) est un trajet optique allant de l'échantillon au dispositif de surveillance de sécurité, passant séquentiellement par la première lentille convergente (24), le second séparateur de faisceau (25) et le premier séparateur de faisceau (22) ;
dans lequel le premier séparateur de faisceau (22) est un séparateur de faisceau dichroïque passe-court configuré pour transmettre la lumière de diffusion Raman dans la lumière provenant du second séparateur de faisceau (25) vers la seconde lentille convergente (41), et le premier séparateur de faisceau (22) est configuré pour réfléchir la lumière infrarouge dans la lumière provenant du second séparateur de faisceau (25) vers le dispositif de surveillance de sécurité ; et
dans lequel le second séparateur de faisceau (25) est un séparateur de faisceau dichroïque passe-long configuré pour réfléchir la lumière d'excitation (11) provenant du laser (10) vers la première lentille convergente (24), et le second séparateur de faisceau (25) est configuré pour transmettre la lumière provenant de la première lentille convergente (24) vers le premier séparateur de faisceau (22), après filtrage de la lumière de diffusion Rayleigh dans la lumière provenant de la première lentille convergente (24),
dans lequel le dispositif de surveillance de sécurité comprend un capteur de température configuré pour détecter une température ou une variation de température de l'échantillon détecté (30) pendant l'irradiation de l'échantillon (30) par la lumière d'excitation (11) provenant du laser (10), le capteur de température comprenant un détecteur infrarouge configuré pour détecter la lumière infrarouge émise par l'échantillon afin d'obtenir la température ou la variation de température de l'échantillon détecté.

12. Le procédé selon la revendication 11, comprenant en outre :
l'envoi d'un signal de commande au laser (10) de manière à réduire une puissance du laser (10) ou à éteindre le laser (10) si le signal indicateur de sécurité indique qu'une sécurité de l'échantillon (30) est affectée par une détection effectuée sur l'échantillon (30).

13. Le procédé selon la revendication 12, dans lequel la surveillance d'un état de sécurité de l'échantillon (30) comprend :
la détection d'une température ou d'une variation de température de l'échantillon détecté (30) pendant l'irradiation de l'échantillon (30) par la lumière d'excitation (11) provenant du laser (10) ; et
l'envoi du signal de commande au laser (10) de manière à réduire la puissance du laser (10) ou à éteindre le laser (10) si la température ou la variation de température détectée de l'échantillon (30) dépasse un seuil.
